# EUROPÄISCHE PATENTSCHRIFT

(11) **EP 3 000 607 B1**
(45) Veröffentlichungstag und Bekanntmachung des Hinweises auf die Patenterteilung: **10.06.2020**
(21) Anmeldenummer: 15002848.8
(22) Anmeldetag: 08.12.2008
(51) Int. Cl.: B41M 3/14, B42D 25/00, B32B 27/18

(54) **VERFAHREN ZUR HERSTELLUNG EINES POLYMERSCHICHTVERBUNDS UND PRODUKT**
METHOD FOR PRODUCING APOLYMER LAYER COMPOSITE AND PRODUCT
PROCÉDÉ POUR FABRIQUER UN COMPOSITE EN COUCHE POLYMERE ET PRODUIT

(30) Priorität: 07.12.2007 DE 102007059747
(43) Veröffentlichungstag der Anmeldung: 30.03.2016
(62) Teilanmeldung aus: 08856485.1
(73) Patentinhaber: Bundesdruckerei GmbH, 10958 Berlin (DE); Covestro Deutschland AG, 51373 Leverkusen (DE)
(72) Erfinder: Hagemann, Michael, DE-13465 Berlin (DE); Mathea, Arthur, DE-14199 Berlin (DE); Muth, Oliver, DE-12277 Berlin (DE); Pflughoefft, Malte, DE-13347 Berlin (DE); Fischer, Jörg, DE-13053 Berlin (DE); Pudleiner, Heinz, DE-47800 Krefeld (DE)
(74) Vertreter: Mammel und Maser

(56) Entgegenhaltungen:
- WO-A-02/27647
- WO-A-2005/058608
- WO-A-2005/098746
- WO-A-2006/102700
- US-A1- 2003 183 695
- US-A1- 2004 011 874

## Beschreibung

Die Erfindung betrifft ein Verfahren zur Herstellung eines Polymerschichtverbunds wobei der Polymerschichtverbund eine Mehrzahl von Polymerschichten aufweist und wobei zumindest eine Polymerschicht eine lasersensitive Komponente enthält, wobei auf zumindest eine der Polymerschichten eine erste personalisierte Information mittels eines Tintenstrahldruckverfahrens als farbige Tintenstrahl-Druckschicht aufgebracht wird, wobei mittels Lasergravur eine zweite personalisierte Information in den erhaltenen Polymerschichtverbund eingebracht wird, und wobei die Polymerschicht mit farbiger Tintenstrahl-Druckschicht zusammen mit den weiteren Polymerschichten zusammengefügt wird. Die Erfindung betrifft des Weiteren einen demgemäß erhältlichen Polymerschichtverbund, ein Sicherheits- und/oder Wertdokument mit einem solchen Polymerschichtverbund sowie ein Verfahren zur Herstellung eines solchen Sicherheits- und/oder Wertdokuments.

Stand der Technik und Hintergrund der Erfindung.

Als Personalisierung eines Sicherheits- und/oder Wertdokuments wird ein Vorgang bezeichnet, bei welchem personalisierte Informationen, i.e. für eine bestimmte Person, welche als Trägerin oder Inhaberin des Sicherheits- und/oder Wertdokuments bestimmt ist, individuelle Informationen, beispielsweise Bildinformationen, wie Passbild, Fingerabdruck etc., Zeichenfolgen, wie Namen, Adresse, Wohnort etc., auf bzw. in dem betreffenden Sicherheits- und/oder Wertdokument angebracht werden. Dies kann beispielsweise in Form von farbigen oder Schwarz/Weiss Bedruckungen oder Lasergravur erfolgen. Alternativ oder zusätzlich können diese oder andere personen-individuellen Informationen aber auch in einem in dem Sicherheits- und/oder Wertdokument integrierten elektronischen Schaltkreis gespeichert sein, wobei dann der elektronische Schaltkreis bzw. die darin enthaltenen Informationen durch authorisierte Personen ausgelesen werden können.

Die Personalisierung kann zentral oder dezentral erfolgen. Bei der zentralen Personalisierung werden die personalisierten Informationen erhoben und einem Hersteller des Sicherheits- und/oder Wertdokuments übermittelt. Dieser bringt dann die personalisierten Informationen in bzw. an dem Sicherheits- und/oder Wertdokument im Zuge dessen Produktion und Fertigstellung an. Bei der dezentralen Personalisierung wird von Hersteller des Sicherheits- und/oder Wertdokuments ein nicht-personalisierter Rohling an eine Stelle geliefert, welche die Erhebung der personalisierten Informationen durchführt und diese dann selbst an bzw. in dem Rohling anbringt und so das Sicherheits- und/oder Wertdokument, ggf. noch durch abschließende Anbringung einer obersten Schutzfolie ergänzt, fertigstellt.

Aus den Literaturstellen DE 2 907 004 C2, DE 3 151 407 C1 und EP 0 219 011 B1 sind verschiedene Verfahren zur Laserbeschriftung von Sicherheits- und/oder Wertdokumenten bekannt. Mit solchen Verfahren können personalisierte Informationen in innenliegende Schichten eines Sicherheits- und/oder Wertdokuments eingebracht werden und sind so sehr gut gegen Manipulationen gesichert.

Allerdings ist mittels dieser Verfahren nicht die Einbringung von farbigen personalisierten Informationen, wie z.B. von Passbildern, möglich.

Aus der WO2005/098746 A ist ein Verfahren zur Herstellung eines Polymerschichtverbundes, wobei der

Polymerschichtverbund eine Mehrzahl von Polymerschichten aufweist und wobei zumindest eine Polymerschicht eine lasersensitive Komponente enthält, bekannt.

Die WO 2005/058608 A lehrt laminierte Sicherheitselemente mit einem mehrfarbigen Bild.

Aus den Literaturstellen US 6, 685, 312, US 6, 932, 527, US 6,979,141, US 7,037,013, US 6,022,429 und US 6,264,296 sind verschiedene Verfahren zur Herstellung von Sicherheits- und/oder Wertdokumenten bekannt, wobei auf einen fertigen Rohling eine Tintenstrahldruckschicht aufgebracht und anschließend ggf. mit einem Schutzlack oder einer Schutzfolie die Tintenstrahldruckschicht zum .Schutz vor mechanischen und/oder chemischen Beschädigungen oder Manipulationen geschützt wird. Diese Verfahren sind daher im Wesentlichen zur dezentralen Personalisierung geeignet. Zwar können mit diesen Verfahren farbige personalisierte Informationen auf dem Sicherheits- und/oder Wertdokument angebracht werden, es ist aber bei der dezentralen Anbringung in aufwändiger Weise die abschließende Aufbringung des Schutzlackes bzw. der Schutzfolie erforderlich. Zudem gewährleistet die resultierende sehr oberflächennahe Anordnung keine hinreichende Sicherheit gegen Manipulationen der personalisierten Informationen, insbesondere wenn diese zu unerlaubten Zwecken entfernt und anderweitig verwendet

oder ausgetauscht werden sollen, wobei dann die Zerstörung lediglich des Schutzlackes oder der Folie hingenommen und diese ggf. ersetzt werden können.

### Technisches Problem der Erfindung

Der Erfindung liegt das technische Problem zu Grunde, ein Verfahren zur Herstellung eines Polymerschichtverbundes für ein Sicherheits- und/oder Wertdokument anzugeben, bei welchem farbige personalisierte Informationen mit hoher Sicherheit gegen Manipulationen gesichert sind, und welches zentral durchgeführt werden kann.

### Grundzüge der Erfindung und bevorzugte Ausführungsformen

Die Erfindung wird durch den Wortlaut der unabhängigen Ansprüche 1 und 15 definiert.Zweckmäßige Weiterbildungen sind den abhängigen Ansprüchen zu entnehmen.

Mit der Erfindung wird erreicht, dass die erste personalisierte Information in Farbe in den Polymerschichtverbund integriert und nicht lediglich aufgedruckt wird. Dadurch ist eine sehr hohe Manipulationssicherheit gewährleistet, da eine Manipulation eine Zerlegung des Polymerschichtverbundes ohne Zerstörung der farbigen Tintenstrahl-Druckschicht erfordert, was praktisch unmöglich ist.

Denn bei dem Zusammenfügungsvorgang wird es sich typischerweise um einem Laminationsverfahrensschritt handeln, wobei die verschiedenen Polymerschichten im Wesentlichen stoffschlüssig miteinander verbunden werden. Es wird daher überflüssig, eine Schutzschicht auf den fertigen Verbund aufzubringen, was die Herstellung erheblich vereinfacht.

Im Einzelnen ist zum Zusammenfügungsvorgang Folgendes anzumerken. Grundsätzlich geht dem Zusammenfügungsvorgang der Schritt des Zusammentragens der verschiedenen Polymerschichten voraus. Das Zusammentragen kann in allen fachüblichen Weisen kontinuierlich, quasi kontinuierlich oder diskontinuierlich erfolgen. Bei einer sogenannten Rolle zu Rolle Produktion (kontinuierliches Zusammentragen) können alle Polymerschichten parallel zueinander geführt werden, so dass nur beim Einlegen einer Rolle auf eine Passgenauigkeit aller Bahnen geachtet werden muss. Nach dem Einlegen und Anfahren erfolgt eine automatisierte Überwachung der Laufgenauigkeit der Bahnen und automatische Korrektur, so dass die verschiedenen Polymerschichten stets in vorgegebener, definierter Position zueinander laufen. Anschließend erfolgt eine Lamination der zueinander positionierten Bahnen, wobei sich die Rollenlamination als besonders effiziente und schnelle Verfahrensweise anbietet. Alternativ kann mit der Bogenlamination (diskontinuierliches Zusammentragen) gearbeitet werden. Dabei enthält ein typischerweise als Polymerschicht ausgebildeter Bogen lateral nebeneinander liegende Bereiche, welche verschiedenen Sicherheits- und/oder Wertdokumenten zugeordnet sind, oder besteht daraus. Schließlich kann mit dokumentenweiser Einzel-Lamination gearbeitet werden. Dabei können beispielsweise elektronische Schaltungen auf Funktion und Tintenstrahldruckschichten auf Fehlerfreiheit geprüft werden, und zwar bevor die betreffenden Polymerschichten zusammengetragen werden. Dadurch wird Ausschuss minimiert, da nur geprüfte Polymerschichten zueinander getragen und dann miteinander zusammengefügt werden. Es entfällt die Notwendigkeit alle Polymerschichten nachzufertigen, sollte eine der Polymerschichten fehlerhaft sein.

Beim quasi kontinuierlichen Zusammentragen werden einzelne Lagen des Polymerschichtverbundes an einer Position zusammengeführt. Die Besonderheit liegt darin, dass die Zuführung sowohl von Rolle als auch Einzelbogen eines Stapels erfolgen kann und dass nicht nur streng parallel sondern auch über kreuz gearbeitet werden kann.

In einer weiteren Verfahrensweise erfolgt das Zusammentragen in einer kombinierten Rolle-zu-Rolle- und Bogenverarbeitung. Hier kann ein Elektronikinlay als Bogen und die Polymerdeckschichten von der Rolle zugeführt werden.

Beim Zusammenfügen werden die verschiedenen Polymerschichten zu einem monolithischen Verbund verbunden. Diese Lamination kann bei Temperaturen zwischen 140 bis 270 °C, vorzugsweise 140 bis 210 °C, und Pressungen (spezifischer Druck direkt am Werkstück) von 1 bis 10 bar, insbesondere 3 bis bar erfolgen.

Nach der Stufe B) (und vor oder nach der Stufe C)) kann eine optische Prüfung stattfinden, um Fehler des Fügens festzustellen. Auch kann dabei die Passgenauigkeit der verschiedenen Polymerschichten geprüft werden.

Nach der Stufe B) oder nach der Stufe C) wird typischerweise eine Vereinzelung der Sicherheits- und/oder Wertdokumente durchgeführt, sofern es sich nicht ohnehin um eine Einzelherstellung handelt. Eine solche Vereinzelung kann durch Schneiden oder Stanzung erfolgen.

In einer Weiterbildung der Erfindung enthält eine der Polymerschichten einen elektronischen Schaltkreis aufliegend oder eingebettet) worunter auch elektronische Schaltungen verstanden werden, wobei eine dritte personalisierte Information vor, insbesondere unmittelbar vor, zugleich oder nach der Stufe C) in den elektronischen Schaltkreis eingespeichert wird. Zweckmäßig ist, wenn diese Polymerschicht auf der Seite des elektronischen Schaltkreises und/oder auf der dem elektronischen Schaltkreis gegenüberliegenden Seite zumindest im Bereich des Chips eine vorzugsweise lichtundurchlässige Bedruckung aufweist. Dadurch kann der elektronische Schaltkreis gegen Lichteinwirkung geschützt werden, oder eine Konverterschicht gemäß der Literaturstelle EP 4106463 eingebracht werden.

Die Polymerschicht mit lasersensitiver Komponente und die Polymerschicht mit farbiger Tintenstrahl-Druckschicht können gleich oder verschieden sein, i.e. die Tintenstrahl-Druckschicht kann auf der Polymerschicht mit lasersensitiver Komponente oder auf einer anderen Polymerschicht angebracht werden. Die Polymerschicht mit elektronischem Schaltkreis kann, muss aber nicht, verschieden von der Polymerschicht oder den Polymerschichten mit Tintenstrahl-Druckschicht und/oder lasersensitiver Komponente sein.

In der Stufe A) wird auf zwei oder mehr verschiedene Polymerschichten eine personalisierte farbige Tintenstrahl-Druckschicht aufgebracht. Es ist auch möglich, auf beiden einander gegenüberliegenden Seiten einer Polymerschicht farbige Tintentstrah1-Druckschichten aufzubringen. Die farbigen Tintenstrahl-Druckschichten auf den verschiedenen
Polymerschichten stellen jeweils Teilinformationen der ersten personalisierten Information dar. Optional werden die farbigen Tintenstrahl-Druckschichten auf verschiedenen Polymerschichten zueinander komplementär und registergenau angeordnet. Mit anderen Worten ausgedrückt, die verschiedenen Tintenstrahl-Druckschichten stellen Teilbilder eines Gesamtbildes dar.

In einer besonders bevorzugten Variante der Erfindung ist die erste personalisierte Information der Farbanteil einer personalisierten Gesamtbildinformation, wobei die zweite personalisierte Information der Schwarzanteil der personalisierten Gesamtbildinformation ist. Hierbei wird die Gesamtbildinformation erst sowohl die Tintenstrahl-Druckschicht als auch die Lasergravur erzeugt, wobei die Tintenstrahldruckschicht ein erstes Teilbild und die Lasergravur ein zweites Teilbild der Gesamtbildinformation darstellen. Es versteht sich, dass dabei die Teilbilder registergenau zueinander erzeugt bzw. angebracht werden müssen.

Optional kann vor der Stufe B), insbesondere unmittelbar vor der Stufe B), eine optische Prüfung der farbigen Tintenstrahl-Druckschicht bzw. der farbigen Tintenstrahl-Druckschichten und/oder eine elektronische Prüfung des elektronischen Schaltkreises durchgeführt werden.

Eine oder mehrere der Polymerschichten können zusätzlich einseitig oder beidseitig mit einer Druckschicht versehen sein, welche mit einer nicht-Tintenstrahldruck-Technologie aufgebracht ist. Hierzu zählen die klassischen Druckverfahren wie Hochdruck (direkt und indirekt), Flachdruck in den Ausprägungen Offsetdruck, Naß- und wasserlos, Durchdruck (Siebdruck), Digital- sowie insbesondere Stichtief- und Rastertiefdruck.

Die Erfindung betrifft des Weiteren einen Polymerschichtverbund erhältlich mit dem erfindungsgemäßen Verfahren. Dabei kann es sich um eine Bahn, einen Bogen oder eine Einzelkarte handeln. Eine Bahn und ein Bogen enthalten eine Mehrzahl von Feldern, wobei jedes Feld nach einer Vereinzelung ein Sicherheits- und/oder Wertdokument bildet. Ein solcher Polymerschichtverbund umfasst eine Mehrzahl von Polymerschichten, wobei zwischen zwei Polymerschichten eine mittels Tintenstrahldruck hergestellte farbige Tintenstrahl-Druckschicht mit einer ersten personalisierten Information angeordnet ist, und wobei in einer der Polymerschichten, enthaltend eine lasersensitiver Komponente, eine mittels Lasergravur herstellte zweite personalisierte Information angeordnet ist. Die Ausführungen zu dem vorstehend beschriebenen Verfahren gelten analog.

Die erste personalisierte Information bzw. die personalisierte Gesamtbildinformation wird typischerweise eine Bilddarstellung, insbesondere ein Passbild einer Person, sein.

Die zweite personalisierte Information kann eine personalisierte Zeichenfolge enthalten oder hieraus bestehen. Dabei kann es sich beispielsweise um den Namen der betreffenden Person, deren Geburtsdatum, und/oder deren Adresse usw. handeln. Die zweite personalisierte Information kann aber auch Dokumenten-individuelle Informationen, wie beispielsweise Seriennummer oder Ausstellungsdatum, umfassen oder hieraus bestehen.

Der Polymerschichtverbund kann 9 bis 15, mit 3 bis 14, insbesondere 5 bis 12 Polymerschichten enthalten bzw. der Polymerschichtverbund kann aus diesen Schichten bestehen. Die Polymerschichten ohne elektronischen Schaltkreis weisen beispielsweise eine Dicke im Bereich von 5 bis 270 µm, vorzugsweise von 10 bis 120 µm, höchstvorzugsweise 20 bis 120 µm auf. Die Polymerschicht mit elektronischem Schaltkreis weist beispielsweise eine Dicke von 50 bis 650 µm auf, beispielsweise im Falle eine Chipmoduls als elektronischem Schaltkreis von 150 bis 650 µm, oder im Falle eines Displaymoduls von 50 bis 600 µm, oder im Falle eines gedünnten Flexchips von 50 bis 200 µm.

Grundsätzlich sind als Werkstoffe für die Polymerschichten alle im Bereich der Sicherheits- und/oder Wertdokumente üblichen Werkstoffe einsetzbar. Die Polymerschichten können, gleich oder verschieden, auf Basis eines Polymerwerkstoffes aus der Gruppe bestehend aus "PC (Polycarbonat, insbesondere Bisphenol A Polycarbonat), PET (Polyethylenglykolterephthalat), PMMA (Polymethylmethacrylat), TPU (Thermoplastische Polyurethan Elastomere), PE (Polyethylen), PP (Polypropylen), PI (Polyimid oder Poly-trans-Isopren), PVC (Polyvinylchlorid) und Copolymere solcher Polymere" gebildet sein. Bevorzugt ist der Einsatz von PC-Werkstoffen, wobei beispielsweise, aber keinesfalls notwendigerweise, auch sogenannte nieder-T_{g}-Werkstoffe einsetzbar sind, insbesondere für die Polymerschicht auf welcher die Tintenstrahl-Druckschicht abgebracht ist, und/oder für die Polymerschicht, welche mit der Polymerschicht, die die Tintenstrahldruckschicht trägt, verbunden ist, und zwar auf der Seite mit der Tintenstrahldruckschicht. Nieder-T_{g}-Werkstoffe sind Polymere, deren Glastemperatur unterhalb von 140 °C liegt.

Bevorzugt ist es dabei, wenn das Grundpolymer zumindest einer der zu verbindenden Polymerschichten gleiche oder verschiedene miteinander reaktive Gruppen enthält, wobei bei einer Laminiertemperatur von weniger als 200°C reaktive Gruppen einer ersten Polymerschicht miteinander und/oder mit reaktiven Gruppen einer zweiten Polymerschicht reagieren. Dadurch kann die Laminiertemperatur herabgesetzt werden kann, ohne dass dadurch der innige Verbund der laminierten Schichten gefährdet wird. Dies liegt im Falle der verschiedenen Polymerschichten mit reaktiven Gruppen daran, dass die verschiedenen Polymerschichten auf Grund der Reaktion der jeweiligen reaktiven Gruppen nicht mehr ohne weiteres delaminiert werden können. Denn es findet zwischen den Polymerschichten eine reaktive Kopplung statt, gleichsam ein reaktives Laminieren. Zum Zweiten wird ermöglicht, dass wegen der niedrigeren Laminiertemperatur eine Veränderung der farbigen Tintenstrahl-Druckschicht, insbesondere eine Farbveränderung, verhindert wird. Bevorzugt ist es dabei, wenn die Glastemperatur T_{g} der zumindest einen Polymerschicht vor der thermischen Laminierung weniger als 120 °C (oder auch weniger als 110 °C oder als 100 °C) beträgt, wobei die Glastemperatur dieser Polymerschicht nach der thermischen Laminierung durch Reaktion reaktiver Gruppen des Grundpolymers der Polymerschicht miteinander um zumindest 5 °C, vorzugsweise zumindest 20 °C, höher als die Glastemperatur vor der thermischen Laminierung ist. Hierbei erfolgt nicht nur eine reaktive Kopplung der miteinander zu laminierenden Schichten, vielmehr erfolgt eine Erhöhung des Molekulargewichts und somit der Glastemperatur durch Vernetzung des Polymers innerhalb der Schicht und zwischen den Schichten. Dies erschwert ein Delaminieren zusätzlich, insbesondere da bei einem Manipulationsversuch die hohen notwendigen Delaminationstemperaturen z.B. die Farben irreversibel beschädigen und so das Dokument zerstört wird. Vorzugsweise beträgt die Laminiertemperatur in Stufe B) bei Einsatz solcher Polymerwerkstoffe weniger als 180 °C, besser noch weniger als 150 °C. Die Auswahl der geeigneten reaktiven Gruppen ist für den Fachmann für Polymerchemie unschwer möglich. Beispielhafte reaktiven Gruppen sind ausgewählt aus der Gruppe bestehend aus "-CN, -OCN, -NCO, -NC, -SH, -Sₓ, -Tos, -SCN, -NCS, -H, Epoxy (-CHOCH₂), -NH₂, -NN⁺, -NN-R, -OH, -COOH, -CHO, -COOR, -Hal (-F, -Cl, -Br, -I), -Me-Hal (Me = zumindest zweiwertiges Metall, beispielsweise Mg), -Si(OR)₃, -SiHal₃, -CH=CH₂, und -COR", wobei R eine beliebige reaktive oder nicht-reaktive Gruppe sein kann, beispielsweise -H, -Hal, C₁-C₂₀-Alkyl, C₃-C₂₀-Aryl, C₄-C₂₀-ArAlkyl, jeweils verzweigt oder linear, gesättigt oder ungesättigt, optional substituiert, oder korrespondierende Heterozyklen mit einem oder mehreren gleichen oder verschiedenen Heteroatomen N, O, oder S". Andere reaktive Gruppen sind selbstverständlich möglich. Hierzu gehören die Reaktionspartner der Diels-Alder Reaktion oder einer Metathese. Die reaktiven Gruppen können direkt an dem Grundpolymer gebunden oder über eine Spacergruppe mit dem Grundpolymer verbunden sein. Als Spacergruppen kommen alle dem Fachmann für Polymerchemie bekannten Spacergruppen in Frage. Dabei können die Spacergruppen auch Oligomere oder Polymere sein, welche Elastizität vermitteln, wodurch eine Bruchgefahr des Sicherheits- und/oder Wertdokuments reduziert wird. Solche elastizitätsvermittelnde Spacergruppen sind dem Fachmann wohl vertraut und brauchen daher hier nicht weiter beschrieben zu werden. Lediglich beispielhaft seien Spacergruppen genannt, welche ausgewählt sind aus der Gruppe bestehend aus "-(CH₂)ₙ-, -(CH₂-CH₂-O)ₙ-, -(SiR₂-O)ₙ-, -(C₆H₄)ₙ-, -(C₆H₁₀)ₙ-, C₁-Cₙ-Alkyl, C₃-C₍ₙ₊₃₎-Aryl, C₄-C₍ₙ₊₄₎-ArAlkyl, jeweils verzweigt oder linear, gesättigt oder ungesättigt, optional substituiert, oder korrespondierende Heterozyklen mit einem oder mehreren , gleichen oder verschiedenen Heteroatomen O, N, oder S" mit n=1 bis 20, vorzugsweise 1 bis 10. Bezüglich weiterer reaktiver Gruppen oder Möglichkeiten der Modifikation wird auf die Literaturstelle "Ullmann's Encyclopaedia of Industrial Chemistry", Wiley Verlag, elektronische Ausgabe 2006, verwiesen. Der Begriff des Grundpolymers bezeichnet im Rahmen der vorstehenden Ausführungen eine Polymerstruktur, welche keine unter den eingesetzten Laminierbedingungen reaktive Gruppen trägt. Es kann sich dabei um Homopolymere oder Copolymere handeln. Es sind auch gegenüber den genannten Polymere modifizierte Polymere umfasst.

Für die Herstellung der Tintenstrahl-Druckschicht sind grundsätzlich alle fachüblichen Tinten einsetzbar. Lediglich beispielhaft sind folgend Komponenten einer geeigneten Tinte beschrieben: A) 0,1 bis 20 Gew.-% eines Bindemittels mit einem Polycarbonatderivat , B) 30 bis 99,9 Gew.-% eines vorzugsweise organischen Lösungsmittels oder Lösungsmittelgemischs, C) 0 bis 10 Gew.-%, bezogen auf Trockenmasse, eines Farbmittels oder Farbmittelgemischs, D) 0 bis 10 Gew.-% eines funktionales Materials oder einer Mischung funktionaler Materialien, E) 0 bis 30 Gew.-% Additive und/oder Hilfsstoffe, oder einer Mischung solcher Stoffe, wobei die Summe der Komponenten A) bis E) stets 100 Gew.-% ergibt, als Tintenstrahldruckfarbe. Solche Polycarbonatderivate sind hochkompatibel mit Polycarbonatwerkstoffen für, insbesondere mit Polycarbonaten auf Basis Bisphenol A, wie beispielsweise Makrofol® Folien. Zudem ist das eingesetzte Polycarbonatderivat hochtemperaturstabil und zeigt keinerlei Verfärbungen bei laminationstypischen Temperaturen bis zu 200 °C und mehr, wodurch auch der Einsatz der vorstehend beschriebenen Nieder-Tg-Werkstoffe nicht notwendig ist. Im Einzelnen kann das Polycarbonatderivat funktionelle Carbonatstruktureinheiten der Formel (I) enthalten, 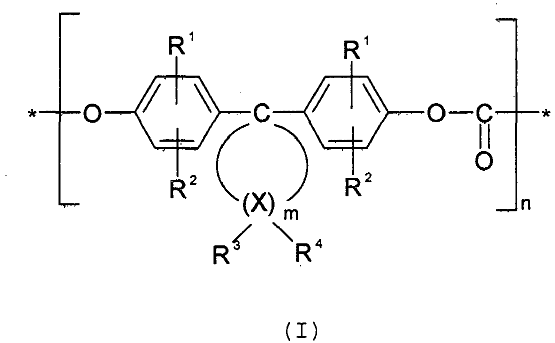 worin R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl; m eine ganze Zahl von 4 bis 7, bevorzugt 4 oder 5; R³ und R⁴ für jedes X individuell wählbar, unabhängig voneinander Wasserstoff oder C₁-C₆-Alkyl; X Kohlenstoff und n eine ganze Zahl größer 20 bedeuten, mit der Maßgabe, dass an mindestens einem Atom X, R³ und R⁴ gleichzeitig Alkyl bedeuten. Bevorzugt ist es, wenn an 1 bis 2 Atomen X, insbesondere nur an einem Atom X, R³ und R⁴ gleichzeitig Alkyl sind. R³ und R⁴ können insbesondere Methyl sein. Die X-Atome in alpha-Stellung zu dem Diphenyl-substituierten C-Atom (C1) können nicht dialkylsubstituiert sein. Die X-Atome in beta-Stellung zu C1 können mit Alkyl disubstituiert sein. Bevorzugt ist m = 4 oder 5. Das Polycarbonatderivat kann beispielsweise auf Basis von Monmeren, wie 4,4'-(3,3,5-trimethylcyclohexan-1,1-diyl)diphenol, 4,4'-(3,3-dimethylcyclohexan-1,1-diyl)diphenol, oder 4,4'-(2,4,4-trimethylcyclopentan-1,1-diyl)diphenol gebildet sein. Ein solches Polycarbonatderivat kann beispielsweise gemäß der Literaturstelle DE 38 32 396.6 aus Diphenolen der Formel (Ia) hergestellt werden. Es können sowohl ein Diphenol der Formel (Ia) unter Bildung von Homopolycarbonaten als auch mehrere Diphenole der Formel (Ia) unter Bildung von Copolycarbonaten verwendet werden (Bedeutung von Resten, Gruppen und Parametern, wie in Formel I).

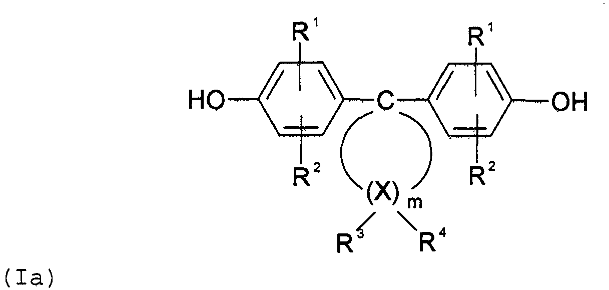

Außerdem können die Diphenole der Formel (Ia) auch im Gemisch mit anderen Diphenolen, beispielsweise mit denen der Formel (Ib)

HO - Z - OH (Ib),

zur Herstellung von hochmolekularen, thermoplastischen, aromatischen Polycarbonatderivaten verwendet werden.

Geeignete andere Diphenole der Formel (Ib) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann. Beispiele der Diphenole der Formel (Ib) sind: Hydrochinon, Resorcin, Dihydroxydiphenyle, Bi-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha , alpha '-Bis-(hydroxyphenyl)-diisopropylbenzole sowie deren kernalkylierte und kernhalogenierte Verbindungen. Diese und weitere geeignete Diphenole sind z.B. in den Literaturstellen US-A 3 028 365, 2 999 835, 3 148 172, 3 275 601, 2 991 273, 3 271 367, 3 062 781, 2 970 131 und 2 999 846, in den Literaturstellen DE-A 1 570 703, 2 063 050, 2 063 052, 2 211 956, der Fr-A 1 561 518 und in der Monographie "H. Schnell, Chemistry and Physics of Polycarbonates, Interscience Publishers, New York 1964", beschrieben. Bevorzugte andere Diphenole sind beispielsweise: 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, alpha , alpha -Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, alpha , alpha -Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan. Besonders bevorzugte Diphenole der Formel (Ib) sind beispielsweise: 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan. Insbesondere ist 2,2-Bis-(4-hydroxyphenyl)-propan bevorzugt. Die anderen Diphenole können sowohl einzeln als auch im Gemisch eingesetzt werden. Das molare Verhältnis von Diphenolen der Formel (Ia) zu den gegebenenfalls mitzuverwendenden anderen Diphenolen der Formel (Ib), soll zwischen 100 Mol-% (Ia) zu 0 Mol-% (Ib) und 2 Mol-% (Ia) zu 98 Mol-% (Ib), vorzugsweise zwischen 100 Mol-% (Ia) zu 0 Mol-% (Ib) und 10 Mol-% (Ia) zu 90 Mol-% (Ib) und insbesondere zwischen 100 Mol-% (Ia) zu 0 Mol-% (Ib) und 30 Mol-% (Ia) zu 70 Mol-% (Ib) liegen. Die hochmolekularen Polycarbonatderivate aus den Diphenolen der Formel (Ia), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein. Die eingesetzten Polycarbonatderivate können in an sich bekannter Weise verzweigt sein. Wenn die Verzweigung gewünscht wird, kann sich in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind: Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-is-(2-hydroxy-5-methyl-benzyl)-4-methylphenol, 2-(4-hydroxyphenyl)-2-(2,4-dihydroxyphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl]-benzol. Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol. Als Kettenabbrecher zur an sich bekannten Regelung des Molekulargewichts der Polycarbonatderivate dienen monofunktionelle Verbindungen in üblichen Konzentraten. Geeignete Verbindungen sind z.B. Phenol, tert.-Butylphenole oder andere Alkyl-substituierte Phenole. Zur Regelung des Molekulargewichts sind insbesondere kleine Mengen Phenole der Formel (Ic) geeignet 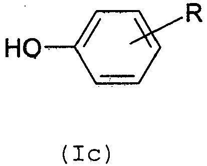 worin R einen verzweigten C₈- und/oder C₉-Alkylrest darstellt. Bevorzugt ist im Alkylrest R der Anteil an CH₃-Protonen zwischen 47 und 89 % und der Anteil der CH- und CH₂-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt. Die Polycarbonatderivate können vorzugsweise nach dem Phasengrenzflächenverhalten (vgl. H. Schnell "Chemistry and Physics of Polycarbonates", Polymer Reviews, Vol. IX, Seite 33ff., Interscience Publ. 1964) in an sich bekannter Weise hergestellt werden. Hierbei werden die Diphenole der Formel (Ia) in wässrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ib), eingesetzt. Zur Regulierung des Molekulargewichts können Kettenabbrecher z.B. der Formel (Ic) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C. Die gegebenenfalls mitverwendeten Verzweiger (bevorzugt 0,05 bis 2,0 Mol-%) können entweder mit den Diphenolen in der wässrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ib) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ib); bei Mitverwendung von Chlorkohlensäureestern kann die Phosgenmenge in bekannter Weise entsprechend reduziert werden. Geeignete organische Lösungsmittel für die Kettenabbrecher sowie gegebenenfalls für die Verzweiger und die Chlorkohlensäureester sind beispielsweise Methylenchlorid, Chlorbenzol sowie insbesondere Mischungen aus Methylenchlorid und Chlorbenzol. Gegebenenfalls können die verwendeten Kettenabbrecher und Verzweiger im gleichen Solvens gelöst werden. Als organische Phase für die Phasengrenzflächenpolykondensation dient beispielsweise Methylenchlorid, Chlorbenzol sowie Mischungen aus Methylenchlorid und Chlorbenzol. Als wässrige alkalische Phase dient beispielsweise NaOH-Lösung. Die Herstellung der Polycarbonatderivate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden. Die Polycarbonatderivate können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden. Die Polycarbonatderivate können linear oder verzweigt sein, sie sind Homopolycarbonate oder Copolycarbonate auf Basis der Diphenole der Formel (Ia). Durch die beliebige Komposition mit anderen Diphenolen, insbesondere mit denen der Formel (Ib) lassen sich die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 10 Mol-% und insbesondere in Mengen von 100 Mol-% bis 30 Mol-%, bezogen auf die Gesamtmenge von 100 Mol-% an Diphenoleinheiten, in Polycarbonatderivaten enthalten. Das Polycarbonatderivat kann ein Copolymer sein enthaltend, insbesondere hieraus bestehend, Monomereinheiten M1 auf Basis der Formel (Ib), vorzugsweise Bisphenol A, sowie Monomereinheiten M2 auf Basis des geminal disubstituierten Dihydroxydiphenylcycloalkans, vorzugsweise des 4,4'-(3,3,5-trimethylcyclohexan-1,1-diyl)diphenols, ist, wobei das Molverhältnis M2/M1 vorzugsweise größer als 0,3, insbesondere größer als 0,4, beispielsweise größer als 0,5 ist. Bevorzugt ist es, wenn das Polycarbonatderivat ein mittleres Molekulargewicht (Gewichtsmittel) von mindestens 10.000, vorzugsweise von 20.000 bis 300.000, aufweist. Die Komponente B kann grundsätzlich im Wesentlichen organisch oder wäßrig sein. Im Wesentlichen wäßrig meint dabei, dass bis zu 20 Gew.-%der Komponente B) organische Lösungsmittel sein können. Im Wesentlichen organisch meint, dass bis zu 5 Gew.-% Wasser in der Komponente B) vorliegen können. Vorzugsweise enthält die Komponente B einen bzw. besteht aus einem flüssigen aliphatischen, cycloaliphatischen, und/oder aromatischen Kohlenwasserstoff, einem flüssigem organischen Ester, und/oder einer Mischung solcher Substanzen. Die eingesetzten organischen Lösungsmittel sind vorzugsweise halogenfreie organische Lösungsmittel. In Frage kommen insbesondere aliphatische, cycloaliphatische, aromatische Kohlenwasserstoffe, wie Mesitylen, 1,2,4- Trimethylbenzol, Cumol und Solvent Naptha, Toluol, Xylol; (organische) Ester, wie Methylacetat, Ethylacetat, Butylacetat, Methoxypropylacetat, Ethyl-3-ethoxypropionat. Bevorzugt sind Mesitylen, 1,2,4-Trimethylbenzol, Cumol und Solvent Naptha, Toluol, Xylol, Essigsäuremethylester, Essigsäureethylester, Methoxypropylacetat. Ethyl-3-ethoxypropionat. Ganz besonders bevorzugt sind: Mesitylen (1,3,5-Trimethylbenzol), 1,2,4-Trimethylbenzol, Cumol (2-Phenylpropan), Solvent Naptha und Ethyl-3-ethoxypropionat. Ein geeignetes Lösungsmittelgemisch umfasst beispielsweise L1) 0 bis 10 Gew.-%, vorzugsweise 1 bis 5 Gew.-%, insbesondere 2 bis 3 Gew.-%, Mesitylen, L2) 10 bis 50 Gew.-%, vorzugsweise 25 bis 50 Gew.-%, insbesondere 30 bis 40 Gew.-%, 1-Methoxy-2-propanolacetat, L3) 0 bis 20 Gew.-%, vorzugsweise 1 bis 20 Gew.-%, insbesondere 7 bis 15 Gew.-%, 1,2,4-Trimethylbenzol, L4) 10 bis 50 Gew.-%, vorzugsweise 25 bis 50 Gew.-%, insbesondere 30 bis 40 Gew.-%, Ethyl-3-ethoxypropionat, L5) 0 bis 10 Gew.-%, vorzugsweise 0,01 bis 2 Gew.-%, insbesondere 0,05 bis 0,5 Gew.-%, Cumol, und L6) 0 bis 80 Gew.-%, vorzugsweise 1 bis 40 Gew.-%, insbesondere 15 bis 25 Gew.-%, Solvent Naphtha, wobei die Summe der Komponenten L1 bis L6 stets 100 Gew.-% ergibt. Das Polycarbonatderivat weist typischerweise ein mittleres Molekulargewicht (Gewichtsmittel) von mindestens 10.000, vorzugsweise von 20.000 bis 300.000. Die Zubereitung kann im Detail enthalten: A) 0,1 bis 10 Gew.-%, insbesondere 0,5 bis 5 Gew.-%, eines Bindemittels mit einem Polycarbonatderivat auf Basis eines geminal disubstituierten Dihydroxydiphenylcycloalkans, B) 40 bis 99,9 Gew.-%, insbesondere 45 bis 99,5 Gew.-%, eines organischen Lösungsmittels oder Lösungsmittelgemischs, C) 0,1 bis 6 Gew.-%, insbesondere 0,5 bis 4 Gew.-%, eines Farbmittels oder Farbmittelgemischs, D) 0,001 bis 6 Gew.-%, insbesondere 0,1 bis 4 Gew.-%, eines funktionales Materials oder einer Mischung funktionaler Materialien, E) 0,1 bis 30 Gew.-%, insbesondere 1 bis 20 Gew.-%, Additive und/oder Hilfsstoffe, oder einer Mischung solcher Stoffe. Als Komponente C, sofern ein Farbmittel vorgesehen sein soll, kommt grundsätzlich jedes beliebige Farbmittel oder Farbmittelgemisch in Frage. Unter Farbmittel sind alle farbgebenden Stoffe bezeichnet. Das bedeutet, es kann sich sowohl um Farbstoffe (einen Überblick über Farbstoffe gibt Ullmann's Encyclopedia of Industrial Chemistry, Electronic Release 2007, Wiley Verlag, Kapitel "Dyes, General Survey", wie auch Pigmente (einen Überblick über organische wie anorganische Pigmente gibt Ullmann's Encyclopedia of Industrial Chemistry, Electronic Release 2007, Wiley Verlag, Kapitel "Pigments, Organic" bzw. "Pigments, Inorganic") handeln. Farbstoffe sollten in den Lösungsmitteln der Komponente B löslich bzw. (stabil) dispergierbar oder suspendierbar sein. Des Weiteren ist es vorteilhaft, wenn das Farbmittel bei Temperaturen von 160 °C und mehr für einen Zeitraum von mehr als 5 min. stabil, insbesondere farbstabil ist. Es ist auch möglich, dass das Farbmittel einer vorgegebenen und reproduzierbaren Farbveränderung unter den Verarbeitungsbedingungen unterworfen ist und entsprechend ausgewählt wird. Pigmente müssen neben der Temperaturstabilität insbesondere in feinster Partikelgrößenverteilung vorliegen. In der Praxis des Tintenstrahldrucks bedeutet dies, dass die Teilchengröße nicht über 1,0 µm hinausgehen sollte, da sonst Verstopfungen im Druckkopf die Folge sind. In der Regel haben sich nanoskalige Festkörperpigmente und gelöste Farbstoffe bewährt. Die Farbmittel können kationisch, anionisch oder auch neutral sein. Lediglich als Beispiele für im Tintenstrahldruck verwendbare Farbmittel seinen genannt: Brillantschwarz C.I. Nr. 28440, Chromogenschwarz C.I. Nr. 14645, Direkttiefschwarz E C.I. Nr. 30235, Echtschwarzsalz B C.I. Nr. 37245, Echtschwarzsalz K C.I. Nr. 37190, Sudanschwarz HB C.I. 26150, Naphtolschwarz C.I. Nr. 20470, Bayscript® Schwarz flüssig, C.I. Basic Black 11, C.I. Basic Blue 154, Cartasol® Türkis K-ZL flüssig, Cartasol® Türkis K-RL flüssig (C.I. Basic Blue 140), Cartasol Blau K5R flüssig. Geeignet sind des Weiteren z. B. die im Handel erhältlichen Farbstoffe Hostafine® Schwarz TS flüssig (vertrieben von Clariant GmbH Deutschland), Bayscript® Schwarz flüssig (C.I.-Gemisch, vertrieben von Bayer AG Deutschland), Cartasol® Schwarz MG flüssig (C.I. Basic Black 11, Eingetragenes Markenzeichen der Clariant GmbH Deutschland), Flexonylschwarz® PR 100 (E C.I. Nr. 30235, vertrieben von Hoechst AG), Rhodamin B, Cartasol® Orange K3 GL, Cartasol® Gelb K4 GL, Cartasol® K GL, oder Cartasol® Rot K-3B. Des weiteren können als lösliche Farbmittel Anthrachinon-, Azo-, Chinophthalon-, Cumarin-, Methin-, Perinon-, und/oder Pyrazolfarbstoffe, z.B. unter dem Markennamen Macrolex® erhältlich, Verwendung finden. Weitere geeignete Farbmittel sind in der Literaturstelle Ullmann's Encyclopedia of Industrial Chemistry, Electronic Release 2007, Wiley Verlag, Kapitel "Colorants Used in Ink Jet Inks" beschrieben. Gut lösliche Farbmittel führen zu einer optimalen Integration in die Matrix bzw. den Binder der Druckschicht. Die Farbmittel können entweder direkt als Farbstoff bzw. Pigment zugesetzt werden oder als Paste, einem Gemisch aus Farbstoff und Pigment zusammen mit einem weiteren Binder. Dieser zusätzliche Binder sollte chemisch kompatibel mit den weiteren Komponenten der Zubereitung sein. Sofern eine solche Paste als Farbmittel eingesetzt wird, bezieht sich die Mengenangabe der Komponente B auf das Farbmittel ohne die sonstigen Komponenten der Paste. Diese sonstigen Komponenten der Paste sind dann unter die Komponente E zu subsumieren. Bei Verwendung von sogenannten Buntpigmenten in den Skalenfarben Cyan-Magenta-Yellow und bevorzugt auch (Ruß)-Schwarz sind Volltonfarbabbildungen möglich. Die Komponente D umfasst Substanzen, die unter Einsatz von technischen Hilfsmitteln unmittelbar durch das menschliche Auge oder durch Verwendung von geeigneten Detektoren ersichtlich sind. Hier sind die dem Fachmann einschlägig bekannten Materialien (vgl. auch van Renesse, Optical document security, 3rd Ed., Artech House, 2005) gemeint, die zu Absicherung von Wert und Sicherheitsdokumenten eingesetzt werden. Dazu zählen Lumineszenzstoffe (Farbstoffe oder Pigmente, organisch oder anorganisch) wie z.B. Photoluminophore, Elektroluminophore, Antistokes Luminophore, Fluorophore aber auch magnetisierbare, photoakustisch adressierbare oder piezoelektrische Materialien. Des Weiteren können Raman-aktive oder Ramanverstärkende Materialien eingesetzt werden, ebenso wie sogenannte Barcode-Materialien. Auch hier gelten als bevorzugte Kriterien entweder die Löslichkeit in der Komponente B oder bei pigmentierten Systemen Teilchengrößen < 1 µm sowie Temperaturstabilität für Temperaturen > 160 °C im Sinne der Ausführungen zur Komponente C. Funktionale Materialien können direkt zugegeben werden oder über eine Paste, i.e. Gemisch mit einem weiteren Binder, welcher dann Bestandteil der Komponente E bildet, oder dem eingesetzten Binder der Komponente A. Die Komponente E umfasst bei Tinten für den Tintenstrahldruck üblicherweise eingerichtete Stoffe wie Antischaummittel, Stellmittel, Netzmittel, Tenside, Fließmittel, Trockner, Katalysatoren, (Licht-) Stabilisatoren, Konservierungsmittel, Biozide, Tenside, organische Polymere zur Viskositätseinstellung, Puffersysteme, etc. Als Stellmittel kommen fachübliche Stellsalze in Frage. Ein Beispiel hierfür ist Natriumlactat. Als Biozide kommen alle handelsüblichen Konservierungsmittel, welche für Tinten verwendet werden, in Frage. Beispiele hierfür sind Proxel®GXL und Parmetol® A26. Als Tenside kommen alle handelsüblichen Tenside, welche für Tinten verwendet werden, in Frage. Bevorzugt sind amphotere oder nichtionische Tenside. Selbstverständlich ist aber auch der Einsatz spezieller anionischer oder kationischer Tenside, welche die Eigenschaften des Farbstoffs nicht verändern, möglich. Beispiele für geeignete Tenside sind Betaine, ethoxilierte Diole usw.. Beispiele sind die Produktreihen Surfynol® und Tergitol®. Die Menge an Tensiden wird beispielsweise mit der Maßgabe gewählt, dass die Oberflächenspannung der Tinte im Bereich von 10 bis 60 mN/m, vorzugsweise 20 bis 45 mN/m, gemessen bei 25 °C, liegt. Es kann ein Puffersystem eingerichtet sein, welches den pH-Wert im Bereich von 2,5 bis 8,5, insbesondere im Bereich von 5 bis 8, stabilisiert. Geeignete Puffersysteme sind Lithiumacetat, Boratpuffer, Triethanolamin oder Essigsäure/Natriumacetat. Ein Puffersystem wird insbesondere im Falle einer im Wesentlichen wässrigen Komponente B in Frage kommen. Zur Einstellung der Viskosität der Tinte können (ggf. wasserlösliche) Polymere vorgesehen sein. Hier kommen alle für übliche Tintenformulierungen geeignete Polymere in Frage.

Beispiele sind wasserlösliche Stärke, insbesondere mit einem mittleren Molekulargewicht von 3.000 bis 7.000, Polyvinylpyrolidon, insbesondere mit einem mittleren Molekulargewicht von 25.000 bis 250.000, Polyvinylalkohol, insbesondere mit einem mittleren Molekulargewicht von 10.000 bis 20.000, Xanthan-Gummi, Carboxy-Methylcellulose, Ethylenoxid/Propylenoxid-Blockcopolymer, insbesondere mit einem mittleren Molekulargewicht von 1.000 bis 8.000. Ein Beispiel für das letztgenannte Blockcopolymer ist die Produktreihe Pluronic®. Der Anteil an Biozid, bezogen auf die Gesamtmenge an Tinte, kann im Bereich von 0 bis 0,5 Gew-%, vorzugsweise 0,1 bis 0,3 Gew.-%, liegen. Der Anteil an Tensid, bezogen auf die Gesamtmenge an Tinte, kann im Bereich von 0 bis 0,2 Gew.-% liegen. Der Anteil an Stellmitteln kann, bezogen auf die Gesamtmenge an Tinte, 0 bis 1 Gew.-%, vorzugsweise 0,1 bis 0,5 Gew.-%, betragen. Zu den Hilfsmitteln werden auch sonstige Komponenten gezählt, wie beispielsweise Essigsäure, Ameisensäure oder n-Methyl-Pyrolidon oder sonstige Polymere aus der eingesetzten Farbstofflösung oder -Paste. Bezüglich Substanzen, welche als Komponente E geeignet sind, wird ergänzend beispielsweise auf Ullmann's Encyclopedia of Chemical Industry, Electronic Release 2007, Wiley Verlag, Kapitel "Paints and Coatings", Sektion "Paint Additives", verwiesen.

Bei der lasersensitiven Komponente kann es sich grundsätzlich um ein Polymer handeln, welches per se sich durch Lasereinstrahlung lokal pyrolysieren und so schwarz färben läßt. Die betreffende Polymerschicht kann auch aus einem solchen Polymer bestehen. Geeignete Polymere sind folgend im Zusammenhang mit lasersensitiven Pigmenten erläutert. Es kann sich bei der lasersensitiven Komponente aber auch um ein lasersensitives Pigment handeln, welches dem Polymerwerkstoff der betreffenden Polymerschicht beigemischt und hierin verteilt ist. Als lasersensitive Pigmente sind alle im technologischen Bereich der Sicherheits- und/oder Wertprodukte bekannte Pigmente einsetzbar. Sie können beispielsweise aus organischen Polymeren gebildet sein, welche eine hohe Absorption der Laserstrahlung aufweisen, beispielsweise PET, ABS, Polystyrol, PPO, Polyphenylensulfid, Polyphenylensulfon, Polyimidsulfon. Es kann sich aber auch beispielsweise um LCPs handeln. Besonders geeignet sind mikrovermahlene Thermoplaste mit einem sehr hohen Schmelzbereich von mehr als 300 °C. Die Teilchengröße ist typischerweise im Bereich von 0,01 bis 100 µm, insbesondere 0,1 bis 50 µm, vorzugsweise 1 bis 20 µm. Die Polymerpartikel können des weiteren lichtsensitive Füllstoffe oder Pigmente enthalten, beispielsweise in einer Menge von 0,1 bis 90 Gew.-%, bezogen auf das lasersensitive Pigment. Dabei kann es sich auch um elektrisch leitfähige Pigmente und/oder Effektpigmente und/oder Farbstoffe, wie vorstehend beschrieben handeln. Es kann sich aber auch um Oxide, Hydroxide, Sulfide, Sulfate oder Phosphate von Metallen, wie beispielsweise Cu, Bi, Sn, Zn, Ag, Sb, Mn, Fe, Ni, oder Cr handeln. Insbesondere basisches Cu(II)hydroxidphosphat ist einsetzbar. Speziell zu nennen ist ein Produkt der Erhitzung von blauem Cu(II)orthophosphat (Cu₃(PO₄)₂*3H₂O) auf 100 bis 200 °C entsteht und eine Summenformel Cu₃(PO₄)₂*Cu(OH)₂ aufweist. Weitere geeignete Kupferphosphate sind: Cu₃(PO₄)₂*3Cu(OH)₂, Cu₃(PO₄)₂*2Cu(OH)₂*2H₂O, 4CuO*P₂O₅, 4CuO*P₂O₅*3H₂O, 4CuO*P₂O₅*1,5H₂O und 4CuO*P₂O₅*1,2H₂O.

Geeignete Laserstrahlung zur Erzeugung der zweiten personalisierten Information weist eine Wellenlänge im Bereich 150 nm bis 10600 nm, insbesondere 150 nm bis 1100 nm, auf. Einsetzbar sind beispielsweise CO₂-Laser (10600 nm), Nd:YAG-Laser (1064 nm bzw. 532 nm), und gepulste UV-Laser (Excimer-Laser. Die Energiedichte liegt im allgemeinen im Bereich von 0,3 mJ/cm² bis 50 J/cm², insbesondere im Bereich 0,3 mJ/cm² bis 10 J/cm².

Auf einer der Polymerschichten oder auf mehreren der Polymerschichten können weitere Druckschichten eingerichtet sein, welche aus dem Bereich der Sicherheits- und/oder Wertdokumente bekannt sind. Diese können auf einer Seite oder auf beiden Seiten der Polymerschicht (en) vor dem Zusammenfügen angebracht sein. Dabei kann eine solche weitere Druckschicht auch auf die Polymerschicht mit farbiger Tintenstrahl-Druckschicht aufgebracht sein, und zwar auch unmittelbar über oder unter der Tintenstrahl-Druckschicht und/oder auf der der Tintenstrahl-Druckschicht gegenüberliegenden Seite der Polymerschicht. Solche Druckschichten können auch funktionale Stoffe, wie vorstehend zur Komponente D) erläutert, enthalten.

Während der Stufe B) ist es auch möglich, beispielsweise (beliebige) Beugungstrukturen einzubringen bzw. aufzubringen, wie beispielsweise aus den Dokumenten DE 199 49 945 oder 100 36 505 bekannte Linsenraster.

Die Erfindung betrifft des Weiteren ein Sicherheits- und/oder Wertdokument enthaltend einen erfindungsgemäßen Polymerschichtverbund sowie optional eine Schicht oder mehrere Schichten auf Basis Papier, Teslin und anderen Verbundmaterialien.

Als Sicherheits- und/oder Wertdokumente seien beispielhaft genannt: Personalausweise, Reisepässe, ID-Karten, Zugangskontrollausweise, Visa, Tickets, Führerscheine, Kraftfahrzeugpapiere, personalisierte Wertpapiere Kreditkarten, und personalisierte Chipkarten. Solche Sicherheits- und/oder Wertdokumente weisen typischerweise zumindest ein Substrat, eine Druckschicht und optional eine transparente Deckschicht auf. Substrat und Deckschicht können ihrerseits aus einer Mehrzahl von Schichten bestehen. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und/oder (organischer) Polymerbasis in Frage. Ein solches Sicherheits- und/oder Wertdokument umfasst innerhalb des Gesamt-Schichtverbundes einen erfindungsgemäßen Polymerschichtverbund. Neben dem erfindungsgemäßen Polymerschichtverbund kann noch zumindest eine (zusätzliche) Druckschicht eingerichtet sein, welche auf einer äußeren Fläche des Polymerschichtverbundes oder auf einer mit dem Polymerschichtverbund verbundenen weiteren Schicht angebracht sein kann.

Die Erfindung betrifft schließlich ein Verfahren zur Herstellung eines erfindungsgemäßen Sicherheits- und/oder Wertdokuments, wobei der Polymerschichtverbund zugleich oder nach der Zusammenfügung der Polymerschichten mit einer Schicht oder mehreren weiteren Schichten auf Basis Papier, Teslin und anderen Verbundmaterialien zusammengefügt wird, beispielsweise durch Laminieren oder Kleben.

Im Folgenden wird die Erfindung anhand lediglich Ausführungsformen darstellenden nicht erfindungsgemäßen Beispielen näher erläutert. Es zeigen:
- Fig. 1:: Prozessablauf der ersten Variante des Zusammentragens und Zusammenfügens verschiedener Polymerschichten,
- Fig. 2:: Prozessablauf der zweiten Variante des Zusammentragens und Zusammenfügens verschiedener Polymerschichten,
- Fig. 3:: Aufbau einer ersten PC ID1 Karte, und
- Fig. 4:: Aufbau einer zweiten PC ID1 Karte.

### Beispiel 1: Herstellungsprozess

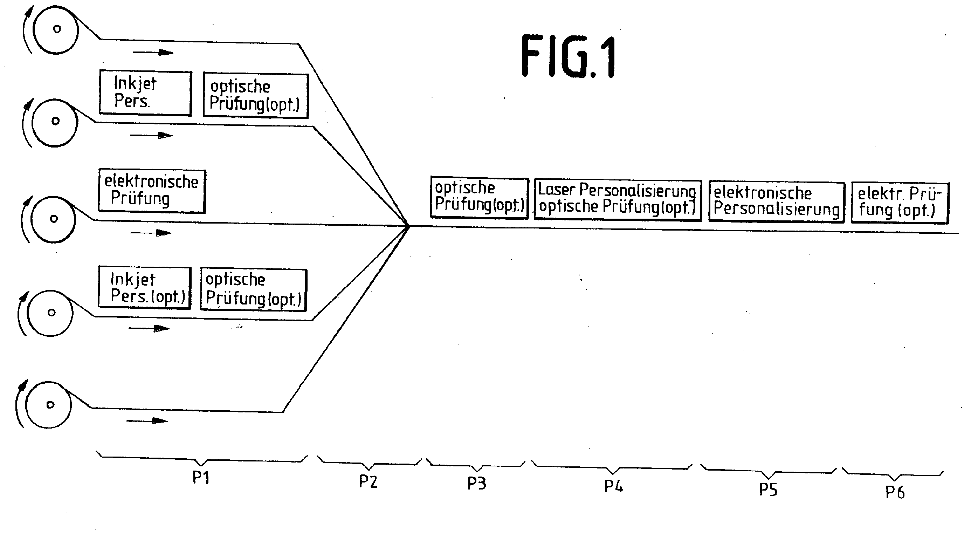

In der Figur 1 erkennt man den Prozess des Zusammentragens und Zusammenfügens zu einem erfindungsgemäßen Polymerschichtverbund. Man erkennt fünf verschiedene Bahnen 1, 2, 3, 4, 5, welche jeweils aus einer Polymerschicht bzw. -Folie gebildet sind. Weitere Bahnen können außerhalb und/oder zwischen den gezeigten Bahnen parallel laufend eingerichtet sein und sind der Übersichtlichkeit halber nicht dargestellt. Bei den Bahnen 1, 2, 3, 4, 5 kann es sich insbesondere um Polycarbonatfolien handeln, wobei die Bahnen 1, 2, 4, 5, gleich oder verschieden, eine Dicke von 5 bis 270 µm aufweisen können. Auf zumindest einer der Bahnen 2, 4, optional auf beiden, ist eine farbige Tintenstrahl-Druckschicht aufgebracht worden, welche eine erste personalisierte Information darstellt. Zumindest eine der Schichten 1, 2, 3, 4, 5 kann ansonsten eine Lasersensitive Komponente enthalten. Nach dem Aufdrucken und vor dem Zusammentragen erfolgt optional eine Trocknung der Tintenstrahl-Druckschicht(en). Auf zumindest einer der Polymerschichten 1, 2, 3, 4, 5 kann zudem eine Druckschicht anderer Drucktechnologien angebracht sein, beispielsweise ein Irisdruck im Hochdruck- oder Offsetdruckverfahren. Die Polymerschicht 3 enthält einen elektronischen Schaltkreis (oder mehrere elektronische Schaltkreise, welche jeweils einem fertigen Sicherheits- und/oder Wertdokument zugeordnet sind). Der elektronische Schaltkreis kann auch in einer der anderen dargestellten Schichten 1, 2, 4, 5 vorgesehen sein.

In der Phase P1 laufen die verschiedenen Polymerschichten 1, 2, 3, 4, 5 zueinander parallel, auf der Schicht 2 erfolgt die Aufbringung einer Tintenstrahl-Druckschicht, optional gefolgt von einer optischen Prüfung der Tintenstrahl-Druckschicht. Desweiteren erfolgt optional eine Prüfung der elektronischen Schaltung in der Schicht 3. Ggf. kann auf der Schicht 4 eine zweite Tintenstrahl-Druckschicht, welche gleich oder verschieden von der ersten Tintenstrahl-Druckschicht ist, aufgebracht werden und optional erfolgt in dieser Phase P1 eine optische Prüfung der zweiten Tintenstrahl-Druckschicht. Dabei können die besagten Tintenstrahl-Druckschichten jeweils unabhängig voneinander auf der einen oder der anderen Seite der Schichten 2, 4 aufgebracht werden. In der Phase P2 werden die verschiedenen Polymerschichten 1, 2, 3, 4, 5 zusammengetragen und im Wege der Lamination zusammengefügt. Eine Fixierung der zusammengetragenen Schichten untereinander vor dem Laminieren kann beispielsweise mittels Ultraschallheften aber auch mit anderen Heftverfahren, wie Klebheftung, erfolgen. Die Lamination kann mit allen fachüblichen Laminationsverfahren, beispielsweise mittels Pressblechen in einer kombinierten Heiz-/ Kühlpresse oder besonders vorteilhaft mittels einer Rollenlamination erfolgen. In der Phase P3 erfolgt optional eine optische Prüfung auf einwandfreie Fügung. In der Phase P4 erfolgt eine Lasergravur mit der zweiten personalisierten Information sowie optional eine anschließende optische Prüfung der Lasergravur. Hierzu enthält eine der Polymerschichten 1, 2, 3, 4, 5 eine lasersensitive Komponente, beispielsweise ein lasersensitives Pigment. In der Phase P5 erfolgt eine elektronische Personalisierung durch Einspeicherung personalisierter Daten in die elektronische Schaltung. In der Phase P6 erfolgt optional eine elektronische Prüfung der eingespeicherten Daten.

### Beispiel 2: Alternativer Herstellungsprozess

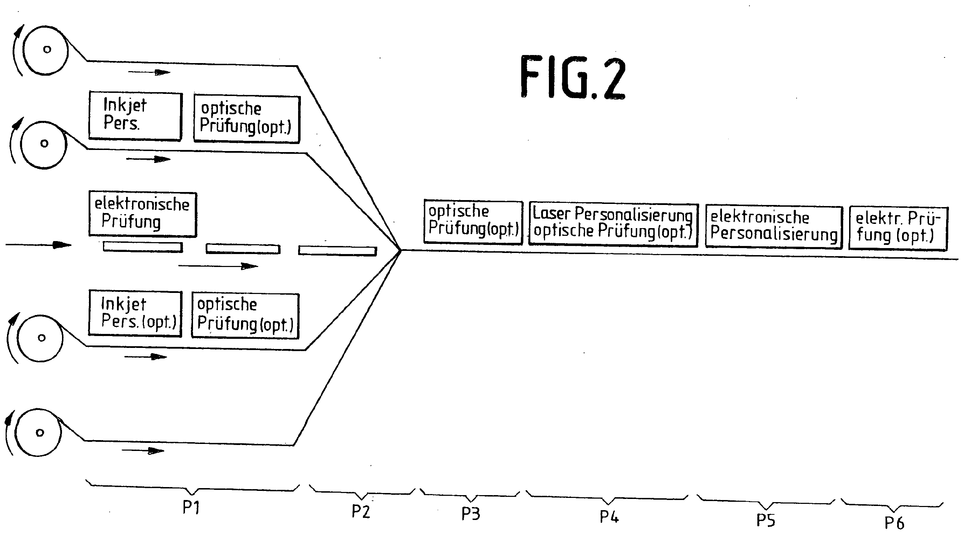

In der Figur 2 erkennt man einen alternativen Prozess des Zusammentragens und Zusammenfügens zu einem erfindungsgemäßen Polymerschichtverbund. Man erkennt 4 verschiedene Bahnen 1, 2, 4, 5, und eine Bogenzuführung 3 welche jeweils aus einer Polymerschicht bzw. -Folie gebildet sind. Weitere Bahnen können außerhalb und/oder zwischen den gezeigten Bahnen parallel laufend eingerichtet sein und sind der Übersichtlichkeit halber nicht dargestellt. Bei den Bahnen, bzw Bogen 1, 2, 3, 4, 5 kann es sich insbesondere um Polycarbonatfolien handeln, wobei die Bahnen 1, 2, 4, 5, gleich oder verschieden, eine Dicke von 5 bis 270 µm aufweisen können. Auf zumindest einer der Bahnen 2, 4, optional auf beiden, ist eine farbige Tintenstrahl-Druckschicht aufgebracht worden, welche eine erste personalisierte Information darstellt. Nach dem Aufdrucken und vor dem Zusammentragen erfolgt optional eine Trocknung der Tintenstrahl-Druckschicht(en). Auf zumindest einer der Polymerschichten 1, 2, 3, 4, 5 kann zudem eine Druckschicht anderer Drucktechnologien angebracht sein, beispielsweise ein Iris-Flachdruck, Guillochen. Die Polymerschicht 3 ist als Bogen ausgeführt und enthält einen elektronischen Schaltkreis in einem Bogen (oder mehrere elektronische Schaltkreise je Bogen, welche jeweils einem fertigen Sicherheits- und/oder Wertdokument zugeordnet sind). Die Bogenzuführung der Schicht 3 kann auch mit einer der anderen Schichten 1, 2, 4, 5 vertauscht sein.

In der Phase P1 laufen die verschiedenen Polymerschichten 1, 2, 3, 4, 5 zueinander parallel, auf der Schicht 2 erfolgt die Aufbringung einer Tintenstrahl-Druckschicht und optional erfolgt in dieser Phase P1 eine optische Prüfung der Tintenstrahl-Druckschicht. Desweiteren erfolgt optional eine Prüfung des elektronischen Schlatkreises in den Bögen 3. Ggf. kann auf der Schicht 4 eine zweite Tintenstrahl-Druckschicht, welche gleich oder verschieden von der ersten Tintenstrahl-Druckschicht ist, aufgebracht werden und optional erfolgt in dieser Phase P1 auch eine optische Prüfung der zweiten Tintenstrahl-Druckschicht. Dabei können die besagten Tintenstrahl-Druckschichten jeweils unabhängig voneinander auf der einen oder der anderen Seite der Schichten 2, 4 aufgebracht werden. Ebenso, wie in Beispiel 1 kann die zweite Tintenstrahldruckschicht eine dritte personalisierte Information darstellen, welche verschieden von der ersten personalisierten Information ist. In der Phase P2 werden die verschiedenen Polymerschichten 1, 2, 3, 4, 5 zusammengetragen und im Wege der Lamination zusammengefügt. Hier ist es besonders vorteilhaft, dass Polymerschicht 3 mit integrierten optionalen elektronischen Schaltkreisen als Bogen 3 verwendet wird. Dies ermöglicht ein vereinfachtes Ausrichten der Bahnen zum Bogen. Eine Fixierung der zusammengetragenen Schichten untereinander kann bespielsweise mittels Ultraschallheften, aber auch mit anderen Heftverfahren, wie Klebheftung, erfolgen. Die Lamination kann mit allen fachüblichen Laminationsverfahren, beispielsweise mittels Pressblechen in einer kombinierten Heiz-/ Kühlpresse oder besonders vorteilhaft in einer Rollenlamination erfolgen. In der Phase P3 erfolgt optional eine optische Prüfung auf einwandfreie Fügung. In der Phase P4 erfolgt eine Lasergravur mit der zweiten personalisierten Information. Hierzu enthält eine der Polymerschichten 1, 2, 3, 4, 5 eine lasersensitive Komponente, beispielsweise ein lasersensitives Pigment. In der Phase P5 erfolgt eine elektronische Personalisierung durch Einspeicherung personalisierter Daten in die elektronische Schaltung. In der Phase P6 erfolgt optional eine elektronische Prüfung der eingespeicherten Daten.

### Beispiel 3: Erste PC ID1 Karte

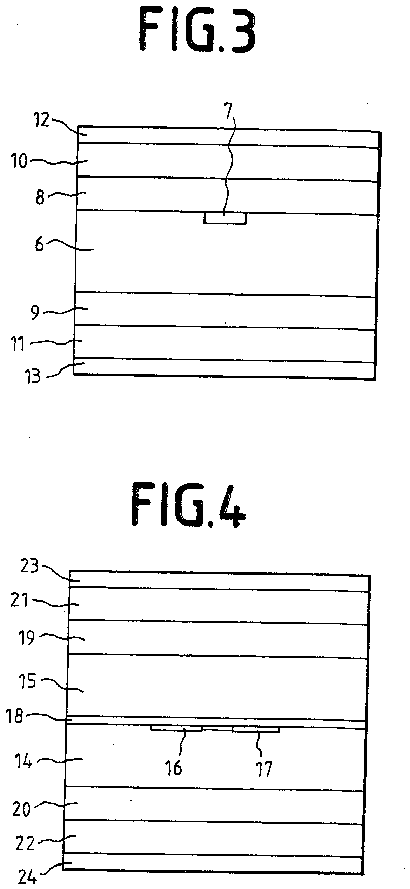

Die Figur 3 zeigt den Schichtaufbau einer Polycarbonat Identitätskarte (beispielsweise Personalausweis). Man erkennt in der Mitte eine Polymerschicht 6 mit einem elektronischen Chip 7 und einer Dicke von 300 µm. Beidseitig der Polymerschicht 6 sind 100 µm dicke, opake Polymerschichten 8, 9 eingerichtet, welche mit einer Druckschicht versehen sind, welche mittels einer vom Tintenstrahldruck verschiedenen Drucktechnologie hergestellt worden ist, beispielsweise einem Irisdruck im Hochdruck- oder Offsetdruckverfahren. Zu dem Polymerschichten 8, 9 unmittelbar angrenzen und aussenliegend befinden sich jeweils eine 100 µm dicke, transparente Polymerschicht 10, 11, wobei zumindest eine der Polymerschichten 10, 11 eine Tintenstrahldruckschicht trägt. Zu den Polymerschichten 10, 11 außenliegend sind schließlich je eine Polymerschicht 12, 13 eingerichtet, welche als 50 µm dicke, transparente Overlay-Schichten ausgebildet sind.

### Beispiel 4: Zweite PC ID1 Karte

In der Mitte erkennt man zwei opake Polymerschichten 14, 15 der Dicke 150 µm wobei auf der einen Polymerschicht 14 und auf der der Polymerschicht zugewandten Seite ein Chip 16 mit einer Antenne 17 aufgebracht ist. Der Chip 16 und die Antenne 17 sind mit einer ersten Druckschicht 18 überdruckt. Nach außen schließen sich opake und 100 µm dicke Polymerschichten 19, 20 an, welche auf der jeweils außenliegenden Seite als Hintergrund eine Druckschicht einer Nicht-Tintenstrahldruck-Technologie, beispielsweise eine Iris im Flachdruck tragen. Weiterhin nach außen schließen sich die 100 µm dicken und transparenten Polymerschichten 21, 22 an, welche innenliegend eine als Hochdruckschicht ausgebildete Beschriftung tragen. Die Polymerschicht 21 weist außenliegend eine Fluoreszenzdruckschicht auf und die Polymerschicht 22 weist außenliegend sowohl eine Druckschicht mit optisch variablen Pigmenten als auch eine Tintenstrahldruckschicht mit personalisierten Informationen, beispielsweise ein Passbild, auf. Die zu äußerst liegenden Polymerschichten 23 und 24 sind 50 µm dick und transparent. Dabei enthält die Polymerschicht 23 eine lasersensitive Komponente, beispielsweise lasersensitive Pigmente. In die Polymerschicht 23 ist dabei mittels Laser eine personalisierte Information geschrieben.

## Patentansprüche

1. Verfahren zur Herstellung eines Polymerschichtverbundes, wobei der Polymerschichtverbund eine Mehrzahl von Polymerschichten (1,2,3,4,5) aufweist und wobei zumindest eine Polymerschicht (1,2,3,4,5) eine lasersensitive Komponente enthält, mit den folgenden Verfahrensschritten:
A) auf zwei oder mehr verschiedene Polymerschichten (2,4) wird eine erste personalisierte Information mittels eines Tintenstrahldruckverfahrens als farbige Tintenstrahl-Druckschicht aufgebracht,
wobei die farbigen Tintenstrahl-Druckschichten auf den verschiedenen Polymerschichten (2, 4) jeweils Teilinformationen der ersten personalisierten Information darstellen,
B) die Polymerschichten (2,4) mit farbiger Tintenstrahl-Druckschicht werden dann zusammen mit den weiteren Polymerschichten (1,3,5) zusammengefügt, wobei die Polymerschichten (2,4) mit farbiger Tintenstrahl-Druckschicht zwischen zwei anderen Polymerschichten (1,3,5) angeordnet sind,
C) mittels Lasergravur wird eine zweite
personalisierte Information in den in Stufe B) erhaltenen Polymerschichtverbund (1,2,3,4,5) eingebracht.

2. Verfahren nach Anspruch 1, wobei eine der Polymerschichten (3) einen elektronischen Schaltkreis enthält und wobei eine dritte personalisierte Information vor, insbesondere unmittelbar vor, zugleich oder nach der Stufe C) in den elektronischen Schaltkreis eingespeichert wird.

3. Verfahren nach Anspruch 1, wobei die farbigen Tintenstrahl-Druckschichten auf verschiedenen Polymerschichten (2, 4) zueinander komplementär und registergenau angeordnet werden.

4. Verfahren nach einem der Ansprüche 1 bis 3, wobei die erste personalisierte Information der Farbanteil einer personalisierten Gesamtbildinformation, und wobei die zweite personalisierte Information der Schwarzanteil der personalisierten Gesamtbildinformation ist.

5. Verfahren nach einem der Ansprüche 1 bis 4, wobei vor der Stufe B), insbesondere unmittelbar vor der Stufe B), eine optische Prüfung der farbigen Tintenstrahl-Druckschichten (2,4) und/oder eine elektronische Prüfung des elektronischen Schaltkreises durchgeführt wird.

6. Polymerschichtverbund erhältlich mit einem Verfahren der Ansprüche 1 bis 5.

7. Polymerschichtverbund nach Anspruch 6, wobei die Polymerschicht (1,2,3,4,5) mit lasersensitiver Komponente und eine Polymerschicht (2,4) mit farbiger Tintenstrahl-Druckschicht gleich sind.

8. Polymerschichtverbund nach Anspruch 6, wobei die Polymerschicht (1,2,3,4,5) mit lasersensitiver Komponente und eine Polymerschicht (2,4) mit farbiger Tintenstrahl-Druckschicht verschieden sind.

9. Polymerschichtverbund nach einem der Ansprüche 6 bis 7, wobei die erste personalisierte Information der Farbanteil einer personalisierten Gesamtbildinformation, und wobei die zweite personalisierte Information der Schwarzanteil der personalisierten Gesamtbildinformation ist, wobei optional die erste personalisierte Information eine Bilddarstellung, insbesondere ein Passbild einer Person, ist, und/oder wobei optional die personalisierte Gesamtbildinformation eine Bilddarstellung, insbesondere ein Passbild einer Person, ist.

10. Polymerschichtverbund nach einem der Ansprüche 6 bis 9, wobei die zweite personalisierte Information eine personalisierte Zeichenfolge enthält.

11. Polymerschichtverbund nach einem der Ansprüche 6 bis 10, mit 3 bis 14, insbesondere 5 bis 12 Polymerschichten.

12. Polymerschichtverbund nach einem der Ansprüche 6 bis 11, wobei die Polymerschichten (1,2,4,5) ohne elektronischem Schaltkreis eine Dicke im Bereich von 5 bis 270 µm, vorzugsweise von 10 bis 120 µm, höchstvorzugsweise 20 bis 120 µm aufweist und/oder wobei die Polymerschicht (3) mit elektronischem Schaltkreis eine Dicke von 50 bis 650 µm aufweist, beispielsweise im Falle eines Chipmoduls als elektronischem Schaltkreis von 150 bis 650 µm, oder im Falle eines gedünnten Flexchips von 50 bis 200 µm.

13. Polymerschichtverbund nach einem der Ansprüche 6 bis 12, wobei die Polymerschichten (1,2,3,4,5), gleich oder verschieden, auf Basis eines Polymerwerkstoffes aus der Gruppe bestehend aus "PC, PET, PMMA, TPU, PE, PP, PI, PVC und Copolymere solcher Polymere" gebildet sind.

14. Sicherheits- und/oder Wertdokument enthaltend einen Polymerschichtverbund nach einem der Ansprüche 6 bis 13 sowie optional eine Schicht oder mehrere Schichten auf Basis Papier, Teslin und anderen Verbundmaterialien.

15. Verfahren zur Herstellung eines Sicherheits- und/oder Wertdokuments nach Anspruch 14, wobei der Polymerschichtverbund zugleich oder nach der Zusammenfügung der Polymerschichten mit einer Schicht oder mehreren weiteren Schichten auf Basis Papier, Teslin und anderen Verbundmaterialien zusammengefügt wird.

## Claims

1. A method of manufacturing a polymer layer composite, wherein said polymer layer composite has a plurality of polymer layers (1, 2, 3, 4, 5) and wherein at least one polymer layer (1, 2, 3, 4, 5) includes a laser-sensitive component, said method comprising the following steps:
A) a first item of personalised information is applied on two or more different polymer layers (2, 4) in the form of a colour ink-jet printed layer realised by means of an ink jet printing process, said colour ink-jet printed layers present on the different polymer layers (2, 4) representing each a partial piece of information of said first item of personalised information,
B) the polymer layers (2, 4) having the colour ink-jet printed layers applied thereon are then assembled with the other polymer layers (1, 3, 5) and joined together, with the polymer layers (2, 4) having the colour ink-jet printed layer applied thereon being arranged between two other polymer layers (1, 3, 5), respectively,
C) a second item of personalised information is introduced into the polymer layer composite (1, 2, 3, 4, 5) obtained in step B) by means of laser engraving.

2. The method as claimed in claim 1, wherein one of the polymer layers (3) includes an electronic circuit and wherein a third item of personalised information is entered into said electronic circuit prior to, in particular immediately prior to, concurrently with, or after step C.

3. The method as claimed in claim 1, wherein the colour ink-jet printed layers present on different polymer layers (2, 4) are disposed in a complementary manner and with register accuracy relative to each other.

4. The method as claimed in any one of claims 1 to 3, wherein the first item of personalised information is the colour portion of personalised overall image information, and wherein the second item of personalised information is the black portion of personalised overall image information.

5. The method as claimed in any one of claims 1 to 4, wherein prior to step B, in particular immediately prior to step B, optical testing of the colour ink-jet printed layers (2, 4) and/or electronic testing of the electronic circuit is performed.

6. A polymer layer composite which can be obtained using a method as claimed in claims 1 to 5.

7. The polymer layer composite as claimed in claim 6, wherein the polymer layer (1, 2, 3, 4, 5) having the laser-sensitive component and a polymer layer (2, 4) having the colour ink-jet printed layer applied thereon are identical.

8. The polymer layer composite as claimed in claim 6, wherein the polymer layer (1, 2, 3, 4, 5) having the laser-sensitive component and a polymer layer (2, 4) having the colour ink-jet printed layer applied thereon are different.

9. The polymer layer composite as claimed in any one of claims 6 to 7, wherein the first item of personalised information is the colour portion of personalised overall image information, and wherein the second item of personalised information is the black portion of personalised overall image information, wherein, optionally, the first item of personalised information is an image representation, in particular a passport photograph of a person, and/or wherein, optionally, the personalised overall image information is an image representation, in particular a passport photograph of a person.

10. The polymer layer composite as claimed in any one of claims 6 to 9, wherein the second item of personalised information includes a personalised character sequence.

11. The polymer layer composite as claimed in any one of claims 6 to 10, including between 3 and 14, in particular between 5 and 12 polymer layers.

12. The polymer layer composite as claimed in any one of claims 6 to 11, wherein the polymer layers (1, 2, 4, 5) devoid of an electronic circuit have a thickness in a range of between 5 and 270 µm, preferably between 10 and 120 µm, most preferably between 20 and 120 µm, and/or wherein the polymer layer (3) including an electronic circuit has a thickness of between 50 and 650 µm, notably between 150 and 650 µm in the case of a chip module used as an electronic circuit, or between 50 and 200 µm in the case of a thinned flex chip.

13. The polymer layer composite as claimed in any one of claims 6 to 12, wherein the polymer layers (1, 2, 3, 4, 5), regardless of whether they are identical or different, are formed using a polymer material selected from the group consisting of "PC, PET, PMMA, TPU, PE, PP, PI, PVC and copolymers of such polymers".

14. The security document and/or document of value including a polymer layer composite as claimed in any one of claims 6 to 13, as well as, optionally, a layer or a plurality of layers based on paper, Teslin, and other composite materials.

15. A method of manufacturing a security document and/or document of value as claimed in claim 14, wherein concurrently with, or after the assembly of the individual polymer layers, the polymer layer composite is joined together with a layer or a plurality of layers based on paper, Teslin, and other composite materials.

## Revendications

1. Procédé destiné à fabriquer un composite de couches polymères, le composite de couches polymères présentant une pluralité de couches polymères (1, 2, 3, 4, 5), et au moins une couche polymère (1, 2, 3, 4, 5) contenant un composant sensible au laser, ledit procédé comprenant les étapes suivantes :
A) une première information personnalisée est appliquée en tant que couche d'impression jet d'encre couleur sur deux ou plusieurs couches polymères différentes (2, 4) au moyen d'un procédé d'impression à jet d'encre, les couches d'impression jet d'encre couleur appliquées sur les couches polymères différentes (2, 4) représentant respectivement des informations partielles de la première information personnalisée,
B) les couches polymères (2, 4) à couche d'impression jet d'encre couleur sont ensuite unies aux autres couches polymères (1, 3, 5), les couches polymères (2, 4) à couche d'impression jet d'encre couleur étant disposées respectivement entre deux autres couches polymères (1, 3, 5),
C) une deuxième information personnalisée est réalisée par gravure au laser dans le composite de couches polymères (1, 2, 3, 4, 5) obtenu à l'étape B).

2. Procédé selon la revendication 1, lors duquel l'une des couches polymères (3) contient un circuit électronique et lors duquel une troisième information personnalisée est stockée dans le circuit électronique, et ce avant, en particulier immédiatement avant, pendant ou après l'étape C).

3. Procédé selon la revendication 1, lors duquel les couches d'impression jet d'encre couleur sur différentes couches polymères (2, 4) sont disposées entre elles de manière complémentaire et par repérage exact.

4. Procédé selon l'une quelconque des revendications 1 à 3, lors duquel la première information personnalisée est la fraction de couleur d'une information d'image personnalisée complète, et lors duquel la deuxième information personnalisée est la fraction de noir de l'information d'image personnalisée complète.

5. Procédé selon l'une quelconque des revendications 1 à 4, lors duquel, avant l'étape B), en particulier immédiatement avant l'étape B), est effectué un examen optique des couches d'impression jet d'encre couleur (2, 4) et/ou un examen électronique du circuit électronique.

6. Composite de couches polymères obtenu grâce à un procédé selon l'une quelconque des revendications 1 à 5.

7. Composite de couches polymères selon la revendication 6, dans lequel la couche polymère (1, 2, 3, 4, 5) à composant sensible au laser et une couche polymère (2, 4) à couche d'impression jet d'encre couleur sont identiques.

8. Composite de couches polymères selon la revendication 6, dans lequel la couche polymère (1, 2, 3, 4, 5) à composant sensible au laser et une couche polymère (2, 4) à couche d'impression jet d'encre couleur sont différentes.

9. Composite de couches polymères selon l'une quelconque des revendications 6 à 7, dans lequel la première information personnalisée est la fraction de couleur d'une information d'image personnalisée complète, et dans lequel la deuxième information personnalisée est la fraction de noir de l'information d'image personnalisée complète, la première information personnalisée étant de manière optionnelle une représentation d'image, en particulier une photo de passeport d'une personne, et/ou l'information d'image personnalisée complète étant de manière optionnelle une représentation d'image, en particulier une photo de passeport d'une personne.

10. Composite de couches polymères selon l'une quelconque des revendications 6 à 9, dans lequel la deuxième information personnalisée contient une suite de caractères.

11. Composite de couches polymères selon l'une quelconque des revendications 6 à 10, lequel présente de 3 à 14, en particulier de 5 à 12, couches polymères.

12. Composite de couches polymères selon l'une quelconque des revendications 6 à 11, dans lequel les couches polymères (1, 2, 4, 5) sans circuit électronique présentent une épaisseur comprise entre 5 et 270 µm, de préférence entre 10 et 120 µm, de manière privilégiée entre 20 et 120 µm, et/ou la couche polymère (3) à circuit électronique présente une épaisseur comprise entre 50 et 650 µm, par exemple entre 150 et 650 µm si le circuit électronique est réalisé en tant que module puce ou entre 50 et 200 µm s'il s'agit d'une puce flexible fine.

13. Composite de couches polymères selon l'une quelconque des revendications 6 à 12, dans lequel les couches polymères (1, 2, 3, 4, 5), qu'elles soient identiques ou différentes, sont formées sur la base d'un matériau polymère appartenant au groupe constitué de "PC, PET, PMMA, TPU, PE, PP, PI, PVC et de copolymères issus desdits polymères".

14. Document de sécurité et/ou de valeur contenant un composite de couches polymères selon l'une quelconque des revendications 6 à 13 ainsi que, de manière optionnelle, une couche ou plusieurs couches formées à base de papier, de Teslin et d'autres matériaux composites.

15. Procédé destiné à fabriquer un document de sécurité et/ou de valeur selon la revendication 14, lors duquel le composite de couches polymères est uni, pendant ou après l'opération d'assemblage des couches polymères, à une couche ou à plusieurs autres couches formées à base de papier, de Teslin et d'autres matériaux composites.
